# EUROPEAN PATENT APPLICATION

(11) **EP 4 765 171 A1**
(43) Date of publication of application: **24.06.2026**
(21) Application number: 25222831.7
(22) Date of filing: 12.12.2025
(51) Int. Cl.: H01F 27/02, H01F 41/12, H01F 27/29, H01F 27/30, B29C 45/14

(54) **ELECTRONIC COMPONENT AND MOLD**

(30) Priority: 12.12.2024 JP 2024217307
(71) Applicant: Shindengen Electric Manufacturing Co., Ltd., Tokyo 100-0004 (JP)
(72) Inventor: UCHIDA, Yoshitaka, Saitama, 3518503 (JP)
(74) Representative: Isern Patentes y Marcas S.L.

(57) **Abstract**

There are provided an electronic component that can be manufactured without reducing production efficiency while preventing a resin from leaking when a bobbin is sealed with the resin, and a mold for sealing the electronic component with the resin. The invention relates to an electronic component including a bobbin on a coil is mounted; a connecting terminal 31 to which one end of the coil is connected and which is fixed to the bobbin; and a mold resin 41 with which the bobbin, the coil, and a part of the connecting terminal 31 are sealed. The bobbin includes an exposed portion 21a exposed from the mold resin 41, and an end portion 31b of the connecting terminal 31 opposite to an end portion 31a to which the one end of the coil is connected protrudes outward from the exposed portion 21a.

## Description

### TECHNICAL FIELD

The present invention relates to an electronic component and a mold.

### BACKGROUND

As a conventional technology, there is a product in which an electronic component, in which a bobbin 21 on which a coil 11 is mounted is sealed with a mold resin 41, is connected to a large-sized substrate. A technology related to such an electronic component is disclosed in Patent Document 1.

In the product in which the electronic component is connected to the large-sized substrate, when the bobbin 21 is to be sealed with the mold resin 41 in a state in which the coil 11 mounted on the bobbin 21 is connected to the large-sized substrate, the number of the electronic components that can be placed in a mold is reduced since the large-sized substrate occupies a large area. As a result, production efficiency decreases.

In addition, in the conventional technology, when a connecting terminal is configured to protrude from the mold resin, the mold resin leaks from a slight gap in the mold, which is a problem.

### CITATION LIST

### PATENT DOCUMENT

Patent Document 1: WO2013/065183

### SUMMARY

In order to solve the above problem, there is a demand for an electronic component that can be manufactured without reducing production efficiency while preventing a resin from leaking by providing an exposed portion in a bobbin to eliminate gaps, and for a mold for sealing the electronic component with the resin.

Various aspects of the invention aim to provide an electronic component that can be manufactured without reducing production efficiency while preventing a resin from leaking when a bobbin is sealed with the resin, and a mold for sealing the electronic component with the resin.

Hereinafter, various aspects of the invention will be described.
[1] An electronic component includes a bobbin on a coil is mounted; a connecting terminal to which one end of the coil is connected and which is fixed to the bobbin; and a mold resin with which the bobbin, the coil, and a part of the connecting terminal are sealed. The bobbin includes an exposed portion exposed from the mold resin, and an end portion of the connecting terminal opposite to an end portion to which the one end of the coil is connected protrudes outward from the exposed portion.

According to the electronic component of [1] above in one aspect of the invention, the bobbin is sealed with the mold resin, the exposed portion of the bobbin exposed from the mold resin is provided, and the connecting terminal, which is connected to the coil mounted on the bobbin and is intended for connection to a substrate, protrudes from the exposed portion to the outside of the mold resin. In this way, when the exposed portion is exposed and resin-sealing is performed using a mold, gaps are eliminated, thereby preventing the mold resin from leaking out of the mold. Therefore, it is possible to realize the electronic component that can be connected to a substrate even if the substrate is a large-sized substrate, and thus can be manufactured without reducing production efficiency.

[2] In the electronic component according to [1] above, the bobbin includes a first tapered portion located opposite to the exposed portion. The first tapered portion is configured to be pressed by a second tapered portion of a mold pin formed on an upper mold of a mold, when sealing is performed with the mold resin, such that the exposed portion is exposed from the mold. The mold resin has a first hole formed by the mold pin. A part of the first tapered portion of the bobbin is exposed from the mold resin through the first hole.

According to the electronic component of[2] above in one aspect of the invention, the first tapered portion is configured to be pressed by the second tapered portion of the mold pin formed on the upper mold of the mold, when sealing is performed with the mold resin, such that the exposed portion is exposed from the mold. Accordingly, the exposed portion of the bobbin exposed from the mold resin is provided. In this way, when the exposed portion is exposed and resin-sealing is performed using the mold, gaps are eliminated, thereby preventing the mold resin from leaking out of the mold. Therefore, it is possible to realize the electronic component that can be connected to a substrate even if the substrate is a large-sized substrate, and thus can be manufactured without reducing production efficiency.

[3] In the electronic component according to [2] above, the mold resin has a second hole. The second hole is a hole formed by a fixing pin formed on a lower mold of the mold and disposed to face the mold pin, by sandwiching the bobbin between the fixing pin and the mold pin when the exposed portion is pressed by the second tapered portion of the mold pin so as to be exposed from the mold. The bobbin is exposed from the mold resin through the second hole.

[4] A mold is a mold for sealing a bobbin including a first tapered portion with a resin, including: an upper mold; and a lower mold. A mold pin including a second tapered portion is formed on the upper mold. A fixing pin is formed on the lower mold at a position facing the mold pin. The second tapered portion of the mold pin is configured to press the first tapered portion of the bobbin such that an exposed portion of the bobbin is exposed from the mold and a connecting terminal protrudes from the exposed portion to an outside of the mold when molding is performed with the resin. The fixing pin sandwiches the bobbin between the fixing pin and the mold pin when the first tapered portion is pressed by the second tapered portion.

According to the mold of [4] above in one aspect of the invention, when the bobbin is sealed with the resin, the bobbin is sandwiched between the fixing pin of the lower mold and the mold pin of the upper mold, and the first tapered portion of the bobbin is pressed by the second tapered portion of the mold pin of the upper mold, thereby reliably exposing the exposed portion of the bobbin from the mold, and causing the connecting terminal to protrude from the exposed portion to the outside of the mold. Accordingly, the exposed portion of the bobbin is exposed from the mold to eliminate gaps, so that the mold resin can be prevented from leaking out of the mold, and resin-sealing can be performed with the connecting terminal protruding. Accordingly, the electronic component can be connected to a substrate by the connecting terminal, and such connection is enabled even if the substrate is a large-sized substrate, so that the mold capable of manufacturing the electronic component without reducing production efficiency can be realized.

According to various aspects of the invention, it is possible to the electronic component that can be manufactured without reducing production efficiency while preventing a resin from leaking when the bobbin is sealed with the resin, and the mold for sealing the electronic component with the resin.

### BRIEF DESCRIPTION OF THE DRAWINGS

Fig. 1 is a perspective view illustrating a state in which a coil is mounted on a bobbin according to one aspect of the invention;
Fig. 2 is a perspective view illustrating a part of an electronic component in which the bobbin with the coil mounted thereon illustrated in Fig. 1 is sealed with resin;
Fig. 3 is a cross-sectional view for explaining a mold for resin-molding an electronic component according one aspect of the invention;
Fig. 4 is a perspective view of the electronic component illustrated in Fig. 2, as viewed from the back side of the bobbin; and
Fig. 5 is a perspective view illustrating the state of the electronic component illustrated in Fig. 4, as viewed from the opposite side.

### DETAILED DESCRIPTION

Hereinafter, an embodiment of the invention will be described in detail with reference to the drawings. However, the invention is not limited to the following description, and it is easily understood by those skilled in the art that modes and details thereof can be modified in various forms without departing from the concept and scope of the invention. Therefore, the invention should not be interpreted as being limited to the content of the embodiment described below.

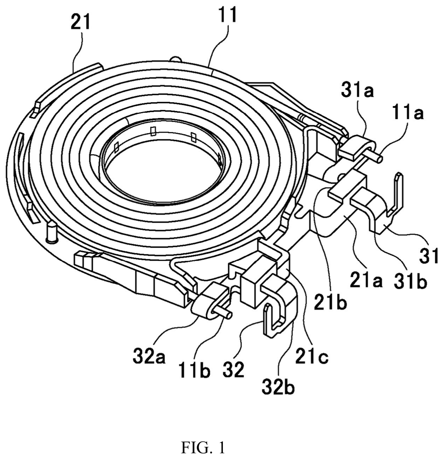

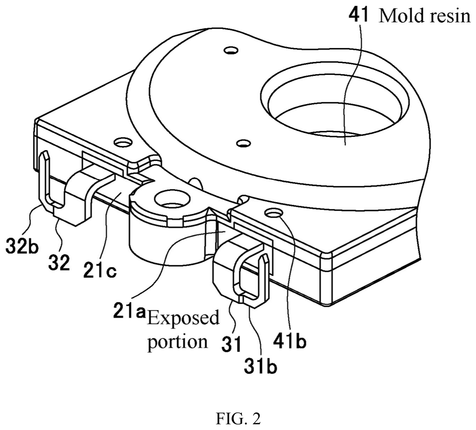

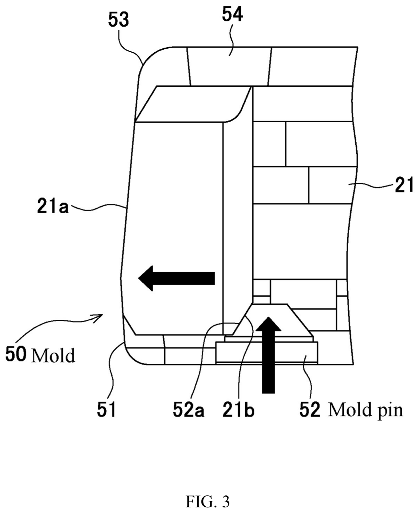

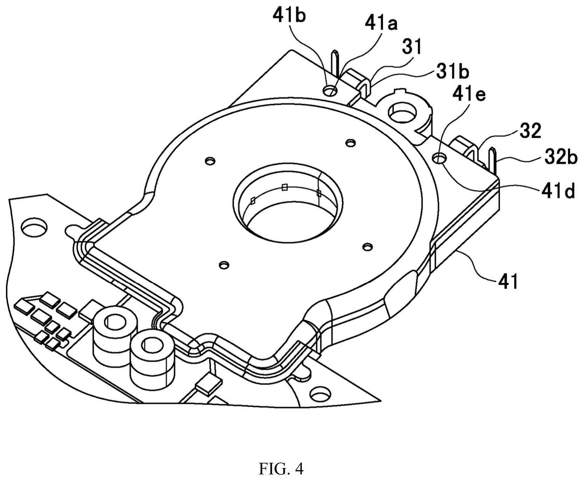

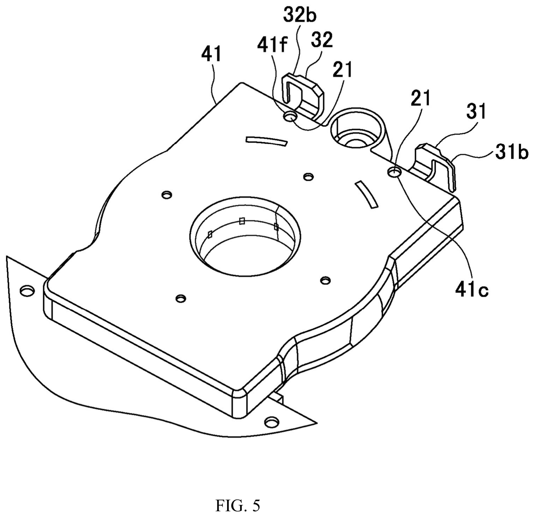

Fig. 1 is a perspective view illustrating a state in which a coil is mounted on a bobbin according to one aspect of the invention. Fig. 2 is a perspective view illustrating a part of an electronic component in which the bobbin with the coil mounted thereon illustrated in Fig. 1 is sealed with resin. Fig. 3 is a cross-sectional view for explaining a mold 50 for resin-molding an electronic component according one aspect of the invention. It should be noted that the cross-sectional view illustrated in Fig. 3 is depicted upside down such that an upper mold 51 of the mold 50 is located at the bottom and a lower mold 53 of the mold 50 is located at the top. Fig. 4 is a perspective view of the electronic component illustrated in Fig. 2, as viewed from the back side of the bobbin. Fig. 5 is a perspective view illustrating the state of the electronic component illustrated in Fig. 4, as viewed from the opposite side.

The electronic component illustrated in Fig. 2 includes a bobbin 21 on which the coil 11 illustrated in Fig. 1 is mounted, and a connecting terminal 31 to which one end 11a of the coil 11 is connected is fixed to the bobbin 21. In addition, a connecting terminal 32 to which the other end 11b of the coil 11 is connected is fixed to the bobbin 21. The one end 11a of the coil 11 is joined to the connecting terminal 31 by heat staking or welding, and the other end 11b of the coil 11 is joined to the connecting terminal 32 by heat staking or welding. The bobbin 21, the coil 11, and parts of the connecting terminals 31 and 32 are sealed with a mold resin 41, and exposed portions 21a and 21c of the bobbin 21 are exposed from the mold resin 41 (see Fig. 2). An end portion 31b of the connecting terminal 31 opposite to an end portion 31a to which the one end 11a of the coil 11 is connected protrudes outward from the exposed portion 21a. In addition, in the connecting terminal 32, an end portion 32b opposite to an end portion 32a to which the other end 11b of the coil 11 is connected protrudes outward from the exposed portion 21c (see Fig. 2).

As illustrated in Fig. 3, the bobbin 21 includes a first tapered portion 21b located opposite to the exposed portion 21a. The first tapered portion 21b is configured to be pressed by a second tapered portion 52a of a mold pin 52 formed on the upper mold 51 of the mold 50, when sealing is performed with the mold resin 41, such that the exposed portion 21a is exposed from the mold 50. Similarly, the bobbin 21 includes a third tapered portion (not illustrated) located opposite to the exposed portion 21c. The third tapered portion is configured to be pressed by a fourth tapered portion (not illustrated) of a mold pin (not illustrated) formed on the upper mold 51 of the mold 50, when sealing is performed with the mold resin 41, such that the exposed portion 21c is exposed from the mold 50. That is, the tapered portions of the bobbin 21 are formed on the upper side of the bobbin 21 so as to correspond to the upper mold 51 of the mold 50.

As illustrated in Fig. 4, the mold resin 41 has a first hole 41b formed by the mold pin 52 illustrated in Fig. 3. Apart 41a of the first tapered portion 21b of the bobbin 21 is visible from the first hole 41b, and is exposed from the mold resin 41 through the first hole 41b.

As illustrated in Fig. 5, the mold resin 41 has a second hole 41c. The second hole 41c is a hole formed by a fixing pin 54 illustrated in Fig. 3. In detail, the second hole 41c is a hole formed by the fixing pin 54 formed on the lower mold 53 of the mold 50 and disposed to face the mold pin 52, by sandwiching the bobbin 21 between the fixing pin 54 and the mold pin 52 when the exposed portion 21a is pressed by the second tapered portion 52a of the mold pin 52 so as to be exposed from the mold 50. The bobbin 21 is visible from the second hole 41c, and is exposed from the mold resin 41 through the second hole 41c (see Fig. 5).

Similarly to the above, as illustrated in Fig. 4, the mold resin 41 has a third hole 41d formed by a mold pin (not illustrated) illustrated in Fig. 3. A part 41e of the third tapered portion of the bobbin 21 is visible from the third hole 41d, and is exposed from the mold resin 41 by the third hole 41d.

In addition, similarly to the above, as illustrated in Fig. 5, the mold resin 41 has a fourth hole 41f. The fourth hole 41f is a hole formed by a fixing pin (not illustrated). In detail, the fourth hole 41f is a hole formed by the fixing pin formed on the lower mold 53 of the mold 50 and disposed to face the mold pin (not illustrated), by sandwiching the bobbin 21 between the fixing pin and the mold pin when the exposed portion 21c is pressed by the fourth tapered portion (not illustrated) of the mold pin so as to be exposed from the mold 50. The bobbin 21 is visible from the fourth hole 41f, and is exposed from the mold resin 41 by the fourth hole 41f (see Fig. 5).

Next, the mold 50 will be described with reference to Fig. 3.

The mold 50 serves to seal the bobbin 21 including the first tapered portion 21b with the resin 41. The mold 50 includes the upper mold 51 and the lower mold 53. The mold pin 52 including the second tapered portion 52a is formed on the upper mold 51, and the fixing pin 54 is formed on the lower mold 53 at a position facing the mold pin 52.

The second tapered portion 52a of the mold pin 52 is configured to press the first tapered portion 21b of the bobbin 21 such that the exposed portion 21a of the bobbin 21 is exposed from the mold 50 and the connecting terminal 31 protrudes from the exposed portion 21a to the outside of the mold 50 when molding is performed with the resin 41. That is, by pressing the first tapered portion 21b of the bobbin 21 with the second tapered portion 52a of the mold pin 52, the bobbin 21 slides so as to be pushed outward, and the exposed portion 21a is exposed from the mold 50. The connecting terminal 31 is formed so as to extend across the inside and the outside of the mold 50. In addition, the fixing pin 54 sandwiches the bobbin 21 between the fixing pin 54 and the mold pin 52 when the first tapered portion 21b is pressed by the second tapered portion 52a. In this way, by sealing the bobbin 21 with the resin 41 using the mold 50, the exposed portion 21a of the bobbin 21 is exposed from the mold 50, and the connecting terminal 31 is formed so as to protrude from the exposed portion 21a to the outside of the mold (see Fig. 2).

Similarly to the above, by sealing the bobbin 21 with the resin 41 using the mold 50, the exposed portion 21c of the bobbin 21 is exposed from the mold 50, and the connecting terminal 32 is formed so as to protrude from the exposed portion 21c to the outside of the mold (see Fig. 2).

According to the mold 50 of the present embodiment, when the bobbin 21 is sealed with the resin 41, as illustrated in Fig. 3, the bobbin 21 is sandwiched between the fixing pin 54 of the lower mold 53 and the mold pin 52 of the upper mold 51 and the first tapered portion 21b of the bobbin 21 is pressed by the second tapered portion 52a of the mold pin 52 of the upper mold 51, thereby reliably exposing the exposed portion 21a of the bobbin 21 from the mold, and causing the connecting terminal 31 to protrude from the exposed portion 21a to the outside of the mold. Accordingly, the exposed portion 21a of the bobbin is exposed from the mold to eliminate gaps, so that the mold resin can be prevented from leaking out of the mold, and resin-sealing can be performed with the connecting terminal 31 protruding. In other words, there is a risk that the transfer mold resin leaks if a slight gap exists between the connecting terminals 31 and 32 and the mold 50; however, transfer resin leakage prevention can be reliably realized by forcibly creating the exposed portions 21a and 21c of the bobbin 21 around the connecting terminals 31 and 32. Therefore, the electronic component can be connected to a substrate by the connecting terminal 31, and such connection is enabled even if the substrate is a large-sized substrate, so that the mold capable of manufacturing the electronic component without reducing production efficiency can be realized.

In addition, in the present embodiment, the invention is applied to the two connecting terminals 31 and 32; however, the invention can also be applied to three or more connecting terminals 31 and 32.

In addition, according to the electronic component of the present embodiment, the bobbin 21 is sealed with the mold resin 41, the exposed portions 21a and 21c of the bobbin 21 exposed from the mold resin 41 are provided as illustrated in illustrated in Fig. 2, and the connecting terminals 31 and 32, which are connected to the coil 11 mounted on the bobbin 21 and is intended for connection to a substrate, protrude from the exposed portions 21a and 21c to the outside of the mold resin 41. In this way, when the exposed portion 21a is exposed and resin-sealing is performed using the mold 50, gaps are eliminated, thereby preventing the mold resin from leaking out of the mold 50. Therefore, it is possible to realize the electronic component that can be connected to a substrate by the connecting terminals 31 and 32 even if the substrate is a large-sized substrate, and thus can be manufactured without reducing production efficiency.

In addition, according to the electronic component of the present embodiment, as illustrated in Figs. 3 and 4, the first tapered portion 21b is configured to be pressed by the second tapered portion 52a of the mold pin 52 formed on the upper mold 51 of the mold, when sealing is performed with the mold resin 41, such that the exposed portion 21a is exposed from the mold. Accordingly, the exposed portion 21a of the bobbin 21 exposed from the mold resin 41 is provided. In the same method as this, the exposed portion 21c of the bobbin 21 exposed from the mold resin 41 is provided. In this way, when the exposed portions 21a and 21c are exposed and resin-sealing is performed using the mold 50, gaps are eliminated, thereby preventing the mold resin from leaking out of the mold. Therefore, it is possible to realize the electronic component that can be connected to a substrate even if the substrate is a large-sized substrate, and thus can be manufactured without reducing production efficiency.

### EXPLANATIONS OF LETTERS OR NUMERALS

- 11: COIL
- 11a: ONE END OF COIL
- 11b: OTHER END OF COIL
- 21: BOBBIN
- 21a, 21c: EXPOSED PORTION
- 21b: FIRST TAPERED PORTION
- 31, 32: CONNECTING TERMINAL
- 31a, 31b: END PORTION OF CONNECTING TERMINAL
- 41: MOLD RESIN
- 41a: PART OF FIRST TAPERED PORTION
- 41b: FIRST HOLE
- 41c: SECOND HOLE
- 50: MOLD
- 51: UPPER MOLD
- 52: MOLD PIN
- 52a: SECOND TAPERED PORTION
- 53: LOWER MOLD
- 54: FIXING PIN

## Claims

1. An electronic component comprising;
a bobbin on a coil is mounted;
a connecting terminal to which one end of the coil is connected and which is fixed to the bobbin; and
a mold resin with which the bobbin, the coil, and a part of the connecting terminal are sealed,
wherein the bobbin includes an exposed portion exposed from the mold resin, and
an end portion of the connecting terminal opposite to an end portion to which the one end of the coil is connected protrudes outward from the exposed portion.

2. The electronic component according to claim 1,
wherein the bobbin includes a first tapered portion located opposite to the exposed portion,
the first tapered portion is configured to be pressed by a second tapered portion of a mold pin formed on an upper mold of a mold, when sealing is performed with the mold resin, such that the exposed portion is exposed from the mold,
the mold resin has a first hole formed by the mold pin, and
a part of the first tapered portion of the bobbin is exposed from the mold resin through the first hole.

3. The electronic component according to claim 2,
wherein the mold resin has a second hole,
the second hole is a hole formed by a fixing pin formed on a lower mold of the mold and disposed to face the mold pin, by sandwiching the bobbin between the fixing pin and the mold pin when the exposed portion is pressed by the second tapered portion of the mold pin so as to be exposed from the mold, and
the bobbin is exposed from the mold resin through the second hole.

4. A mold for sealing a bobbin including a first tapered portion with a resin, comprising:
an upper mold; and
a lower mold,
wherein a mold pin including a second tapered portion is formed on the upper mold,
a fixing pin is formed on the lower mold at a position facing the mold pin,
the second tapered portion of the mold pin is configured to press the first tapered portion of the bobbin such that an exposed portion of the bobbin is exposed from the mold and a connecting terminal protrudes from the exposed portion to an outside of the mold when molding is performed with the resin, and
the fixing pin sandwiches the bobbin between the fixing pin and the mold pin when the first tapered portion is pressed by the second tapered portion.
